(19) Europäisches Patentamt
European Patent Office
Office européen des brevets

(11) Veröffentlichungsnummer: **0 193 135**
**A2**

(12) # EUROPÄISCHE PATENTANMELDUNG

(21) Anmeldenummer: 86102291.1

(51) Int. Cl.[4]: B 01 D 53/34

(22) Anmeldetag: 21.02.86

(30) Priorität: 01.03.85 DE 3507198

(43) Veröffentlichungstag der Anmeldung: 03.09.86 Patentblatt 86/36

(84) Benannte Vertragsstaaten: AT BE CH DE FR GB IT LI LU NL SE

(71) Anmelder: Hugo Petersen Ges. für verfahrenstechn. Anlagenbau mbH & Co KG
Dantestrasse 4-6
D-6200 Wiesbaden 1(DE)

(72) Erfinder: Cleve, Urban, Dipl.-Ing.
Längestenstrasse 19
D-5275 Bergneustadt(DE)

(74) Vertreter: Carstens, Wilhelm, Dipl.-Phys.
L. & C. Steinmüller GmbH Patentabteilung Postfach 10 08 55/10 08 65
D-5270 Gummersbach 1(DE)

(54) **Verfahren zur Entfernung von Schwefeldioxid und Stickstoffoxiden aus Abgasen.**

(57) Bei einem Verfahren und einer Vorrichtung zur Entfernung von Schwefeldioxid und Stickstoffoxiden aus einem Abgas, bei dem das Abgas mindestens durch eine als Wanderschicht ausgebildete erste Schicht (14) aus einem körnigen, kohlenstoffhaltigen Adsorptionsmittel und danach durch eine zweite Schicht (15) aus einem solchen Adsorptionsmittel strömt und bei dem zumindest vor der ersten Schicht Ammoniak (9) oder eine Ammoniakvorstufe in das Abgas zugegeben wird, wobei aus den sich im wesentlichen senkrecht erstreckenden Schichten unten Adsorptionsmittel abgezogen und oben Adsorptionsmittel zugeführt werden kann, ist erfindungsgemäß vorgesehen, daß der Hauptteil an Schwefeldioxid vor der Ammoniakzugabe durch Zugabe von Schwefeldioxid bindenden Additiven (3) entfernt wird und für die Schichten (14, 15) unterschiedliche Adsorptionsmittel eingesetzt werden.

./...

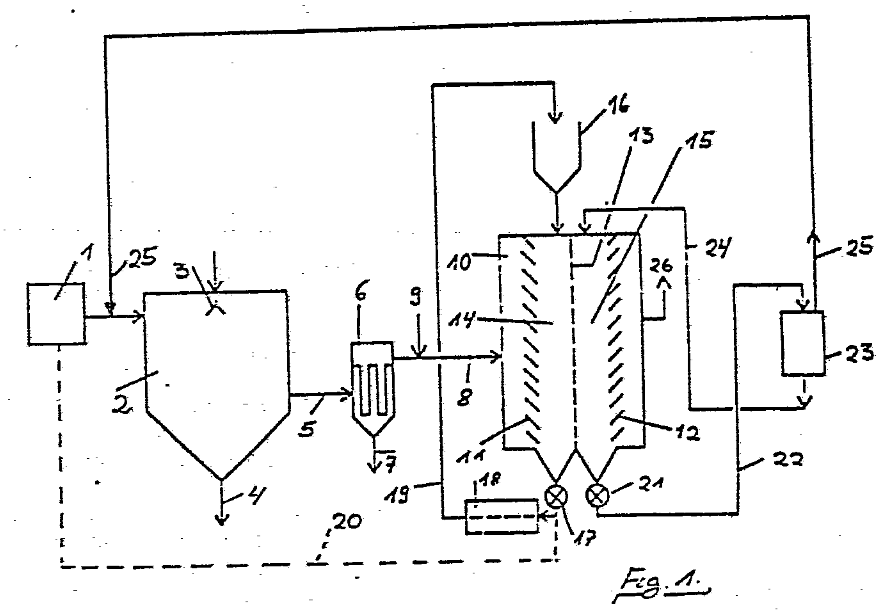


Fig. 1.

Hugo Petersen
Gesellschaft für verfahrenstechnischen Anlagenbau mbH & Co KG
Postfach 4640

6200 Wiesbaden, 20.02.1986

0193135

## Beschreibung

## Verfahren zur Entfernung von Schwefeldioxid und Stickstoffoxiden aus Abgasen

Die Erfindung betrifft ein Verfahren zur Entfernung von Schwefeldioxid und Stickstoffoxiden aus einem Abgas, bei dem das Abgas mindestens durch eine als Wanderschicht ausgebildete erste Schicht aus einem körnigen, kohlenstoffhaltigen Adsorptionsmittel und danach durch eine zweite Schicht aus einem solchen Adsorptionsmittel strömt und bei dem zumindest vor der ersten Schicht Ammoniak oder eine Ammoniakvorstufe in das Abgas zugegeben wird, wobei aus den sich im wesentlichen senkrecht erstreckenden Schichten unten Adsorptionsmittel abgezogen und oben Adsorptionsmittel zugeführt werden kann.

Aus der DE-OS 31 01 053, Seite 7, zweiter Absatz ist ein zweistufiges Verfahren bekannt, bei dem die als Wanderschicht von oben nach unten wandernde erste Adsorptionsmittelschicht in erster Linie der adsorptiven Entfernung von Schwefeloxiden dient, während in einer zweiten, der ersten sehr ähnlichen Wanderschicht vor allem die katalytische Reduktion der Stickstoffoxide zu Stickstoff in Gegenwart von gasförmigem Ammoniak erfolgt. Weiterhin ist aus der DE-OS 31 01 053 ein Verfahren bekannt, bei dem das Adsorptionsmittel einer der beiden Wanderschichten aufgegeben wird, teilbeladenes

./.

Adsorpionsmittel von der einen Wanderschicht abgezogen und der anderen Wanderschicht aufgegeben wird, beladenes Adsorptionsmittel von der anderen Wanderschicht abgezogen und einer Regenerierstufe zugeführt wird und schließlich regeneriertes Adsorptionsmittel der einen Wanderschicht wieder aufgegeben wird. Bei dieser Verfahrensführung wird bevorzugt, daß die Wanderschichten übereinander angeordnet sind, und das unbeladene Adsorptionsmittel am obersten Ende zugeführt und beladenes Adsorptionsmittel am untersten Ende abgezogen wird, wobei zwischen den die beiden Wanderschichten bestimmenden Reaktoren ein Verbindungsorgan für die Überführung des teilbeladenen Adsorptionsmittels von der oberen in die untere Wanderschicht vorgesehen ist. Bei beiden bekannten Verfahrensführungen werden die Wanderschichten von dem gleichen Adsorptionsmittel gebildet, und es wird bei beiden Verfahrensführungen angestrebt, das gesamte in dem Abgas enthaltene Schwefeloxid mittels dem körnigen, kohlenstoffhaltigen Adsorptionsmittel abzuscheiden. Die für die katalytische Reduktion der Stickstoffoxide erforderliche Einbringung des Ammoniaks führt in Gegenwart von im Abgas vorhandenem Schwefeldioxid gemäß folgender Reaktionsgleichung

$$4\ NH_3 + 2\ SO_2 + 2\ H_2O + O_2 \longrightarrow 2(NH_4)_2SO_4$$

zur Bildung von Ammoniumsulfat in Form von Staubpartikeln. Es kommt auch zur Bildung von Ammoniumhydrogensulfat. Die Ammoniumsulfate erhöhen somit den Staubgehalt im Abgas und führen zu einer Feststoffbeladung des Adsorptionsmittels, das vorzugsweise in Form von Aktivkohle oder Aktivkoks vorliegt. Hierdurch wird die katalytische Aktivität des Adsorptionsmittels beeinträchtigt. Gleichzeitig kommt es auch zu einer unerwünschten Erhöhung des Druckverlustes über die Schicht, weil der freie Strömungsquerschnitt zwischen den Adsorptionsmittelteilchen verkleinert wird.

Ferner besteht die Gefahr, daß im Abgas zum Schornstein ein zu hoher Staubanteil bestehend aus Koks/Kohleabrieb, Ammoniumsulfat/Ammoniumhydrogensulfat und Reststaub vorliegen kann.

Ein weiteres Problem besteht darin, daß die Aktivität des katalytisch wirksamen Adsoptionsmittels durch die Adsorption von Schwefeldioxid als Schwefelsäure nach der folgenden Reaktionsgleichung:

$$2\ SO_2 + 2\ H_2O + O_2 \longrightarrow 2\ H_2SO_4$$

gemindert wird.

Weiterhin ist es zur Entfernung von Schwefeldioxid bekannt, das Abgas einer Naßwäsche, einer Sprühadsorptionswäsche oder einer trockenen Wäsche zu unterziehen, bei der Schwefeldioxid bindende Additive, insbesondere calciumhaltige Verbindungen dem Abgas zugesetzt werden.

Es ist die Aufgabe der vorliegenden Erfindung, ein Verfahren der vorstehend genannten Art anzugeben, bei dem die Belastung des Adsorptionsmittels durch die Bildung von Ammoniumhydrogensulfat verringert und zugleich die Wirtschaftlichkeit des Verfahrens verbessert wird.

Diese Aufgabe wird dadurch gelöst, daß der Hauptteil an Schwefeldioxid vor der Ammoniakzugabe durch Zugabe von Schwefeldioxid bindenden Additiven entfernt wird und für die Schichten unterschiedliche Adsorptionsmittel eingesetzt werden.

Der Hauptteil des $SO_2$ wird in einer vorgeschalteten Wäsche, insbesondere nach dem Trockenadditivverfahren, dem Halbtrockenverfahren oder dem Naßverfahren, abgeschieden, wobei als Absorptionsmittel Kalk, Kalkstein, Natronlauge,

./.

Magnesiumoxid oder andere Absorbentien Verwendung finden können; dabei werden Abscheidewirkungsgrade von über 80% bis 98% erreicht.

Durch die vorherige Entfernung des Hauptteiles an Schwefeldioxid wird die erste Schicht von einem Abgas mit nur einem Restgehalt an $SO_2$ beaufschlagt, so daß es nach Zugabe des Ammoniaks nur noch zu einer verringerten Bildung von Ammoniumsulfaten kommt, sowie eine Abscheidung von Rest-$SO_2$ erreicht wird.

In der ersten Schicht werden die noch vom Rauchgas mitgeführten und in Partikel- oder Aerosolform vorliegenden Verunreinigungen abgeschieden, wie auf die Wäsche zurückzuführende Alkali- und/oder Erdalkaliverbindungen, insbesondere Calciumverbindungen, Restflugstaub, Schwermetallverbindungen und das sich bildende Ammoniumhydrogensulfat. Weiterhin erfolgt eine Adsorption von noch nicht gebundenem Rest-$SO_2$.

Die Adsorptionsmittel können sich in ihrer Körnung, katalytischen Aktivität und/oder ihrem Grundmaterial unterscheiden. Während für die zweite Schicht hochwertige Aktivkohle/Aktivkoks eingesetzt wird, wird für die erste Schicht Koks oder Kohle in relativ grobkörniger bis bruchstückhafter Form eingesetzt, die wesentlich billiger ist als die hochwertige Aktivkohle/Aktivkoks. Das für die erste Schicht eingesetzte Adsorptionsmittel besitzt dann zwar ein geringeres Porenvolumen, aber noch ein sehr gutes Rückhaltevermögen für staubförmige Teilchen und noch eine ausreichende katalytische Aktivität für die Entfernung des Rest-$SO_2$.

Die Adsorptionsmittel können sich in ihrem Grundmaterial unterscheiden, wenn z.B. als Grundmaterial Steinkohle oder Braunkohle benutzt wird. Für die erste Schicht wird bevorzugt Braunkohlenkoks, insbesondere Bruchkoks,

./.

Braunkohlen-Aktivkoks oder Braunkohlen-Aktivkohle, eingesetzt. Die bevorzugte obere Korngröße der Körnung liegt bei 10 mm, wobei im Falle des Einsatzes von Adsorptionsmittel auf Braunkohle-Basis eine obere Korngröße von 4 mm wiederum bevorzugt wird.

Die untere Korngrenze ist frei wählbar; es muß jedoch sichergestellt werden, daß das Adsorptionsmittel durch das die Schicht quer anströmende Abgas nicht mit ausgetragen wird. Sie wird daher vorzugsweise im Bereich von 1 bis 3 mm liegen. Für den hochwertigen Aktivkoks/Aktivkohle für die zweite Schicht liegt die obere Korngrenze üblicherweise bei 5 bis 10 mm.

So lange das Adsorptionsmittel der ersten Schicht seine Aufgaben hinsichtlich der Einbindung des Rest-$SO_2$ und der Staubabscheidung erfüllen kann, kann es nach entsprechender Feinteilabscheidung wieder der im oberen Ende der Wanderschicht zugeführt werden. Ist dies nicht mehr der Fall, so kann das aus der ersten Schicht abgezogene Adsorptionsmittel einer Feuerungsanlage zugeführt und dort verbrannt werden, insbesondere der Feurerungsanlage, aus der die Abgase stammen. Es ist jedoch auch möglich, kein Material vom unteren Ende der ersten Schicht zurückzuführen, sondern alles beladene und verunreinigte Material der Feuerung zuzuführen. Diese Feuerung ist vorzugsweise eine Schmelzfeuerung oder eine Staubfeuerung mit trockenem Ascheabzug, um die mit dem Adsorptionsmaterial mitgeführten Bestandteile in die Schlacke bzw. Asche einzubinden. Das Adsorptionsmittel kann vor Einbringen in die Feuerungsanlage noch gemahlen werden, und zwar zusammen mit dem Hauptbrennstoff der Feuerungsanlage oder einer gesonderten Mühle. Weiterhin kann das Adsorptionsmittel zusammen mit rückgeführtem Flugstaub und/oder vermischt mit dem Hauptbrennstoff eingebracht werden. Auch kann das Adsorptionmittel als Zusatzbrennstoff der Feuerung zugeführt werden, wie dies

./.

in der DE-OS 33 17 507 beschrieben ist.

Da für die zweite Adsorptionsmittelschicht ein höherwertiges Adsorptionsmittel in Form des Aktivkoks/ Aktivkohle eingesetzt wird, ist es zweckmäßig, wenn das abgezogene Adsorptionsmittel in an sich bekannter Weise regeneriert und der zweiten Schicht wieder zugeführt wird.

Da eine $SO_2$-Vorwäsche vorhanden ist, wird vorzugsweise das Desorptionsgas der Regeneration dem Abgasstrom vor Zugabe der schwefeleinbindenden Additive zugeführt.

Es ist natürlich auch möglich, das Adsorptionsmittel der zweiten Schicht der Feuerungsanlage zuzuführen. Es ist grundsätzlich möglich, auch die zweite Schicht als Wanderschicht auszubilden. Da bei der erfindungsgemäßen Verfahrensführung die zweite Schicht jedoch nur sehr langsam beladen und damit desaktiviert wird, kann an Stelle einer sich langsam bewegenden Wanderschicht auch eine chargenweise ersetzte und somit über vorgegebene Zeiten ruhende Schicht verwendet werden. Es ist zweckmäßig, das Ammoniak nicht nur vor der ersten Schicht, sondern auch vor der zweiten Schicht zuzusetzen. Vor der ersten Schicht wird dem Abgas bezogen auf den $SO_2$- und $NO_x$-Gehalt im Abgas eine überstöchiometrische Ammoniakmenge zugemischt, während vor der zweiten Schicht Ammoniak bezogen auf den $NO_x$-Gehalt im unterstöchiomtetrischen bis im wesentlichen stöchiometrischen Verhältnis zugemischt wird. Um einen Minimalgehalt an $SO_2$ im Abgas vor der zweiten Schicht zu erhalten, wird die Wandergeschwingigkeit des Adsorptionsmittels in der ersten Schicht vorzugsweise in Abhängigkeit von einem Minimal-$SO_2$-Gehalt im Abgas nach der ersten Schicht und/oder dem Druckverlust in der ersten Schicht geregelt.

Das Abgas kann die Schichten quer zu Erstreckungsrichtung druchströmen. Es ist aber insbesondere auch möglich, daß

./.

bei Ausbildung der Schichten als Wanderschicht das Abgas die Schicht im Gegenstrom durchströmt, also insbesondere die erste Schicht im Gegenstrom durchströmt wird.

Die Erfindung richtet sich auch auf eine Vorrichtung zur Durchführung des Verfahrens, bestehend aus mindestens zwei mit einem kohlenstoffhaltigen Adsorptionsmittel gefüllten und hintereinander angeordneten Schichtreaktoren, von denen mindestens der erste ein Wanderschichtreaktor ist, aus Aufgabeeinrichtungen am oberen Ende der Reaktoren und Abfuhreinrichtungen am unteren Ende der Reaktoren und Abgaszuführ- und -abführleitungen und aus mindestens einer Einrichtung für die Zufuhr von Ammoniak in das Abgas.

Erfindungsgemäß ist die Vorrichtung dadurch gekennzeichnet, daß ein Wäscher für die trockene oder nasse Wäsche des Abgases mit Schwefeldioxid bindenden Additiven vorgesehen ist und die Schichtreaktoren mit unterschiedlichen Adsorptionsmitteln gefüllt sind.

Es ist zweckmäßig, wenn die beiden Schichtreaktoren durch Anordnung einer Gasdurchlässigen Trennwand in einem Behälter ausgebildet sind, wenn nur die Zufuhr von Ammoniak in die Zuführleitung vorgesehen ist.

Soll jedoch auch Ammoniak nach der ersten Schicht zugeführt werden, ist es von Vorteil, wenn die beiden Schichtreaktoren von zwei getrennten Behältern gebildet sind, die durch eine Verbindungsleitung miteinander verbunden sind, an der eine weitere Einrichtung für die Zufuhr von Ammoniak vorgesehen ist.

Der zweite Schichtreaktor kann ebenfalls ein Wanderbettreaktor oder ein chargenweise beladbarer Reaktor sein.

Weiterhin wird bevorzugt, daß der erste beschickte

Wanderschichtreaktor ein Tiefbettreaktor ist, der als Quer- oder Gegenstromreaktor ausgebildet ist.

Schließlich wird bevorzugt, daß die beiden Reaktoren Wanderschichtreaktoren mit unterschiedlichen Wandergeschwindigkeiten sind.

Das erfindungsgemäße Verfahren und die Vorrichtung sollen nachfolgend anhand zweier Ausführungsbeispiele in Verbindung mit den beigefügten Figuren näher erläutert werden. Es zeigen:

Fig. 1 ein Verfahrensschema einer ersten Verfahrensführung, bei dem das Abgas beispielsweise einer Sprühabsorptionswäsche unterzogen wird, und zwei Wanderschichten in einem Behälter angeordnet sind, und das Adsorptionsmittel der ersten Schicht zumindest teilweise der Wanderschicht wieder zugeführt wird und

Fig. 2 ein Verfahrensschema, bei dem das aus der ersten Schicht abgezogene Adsorptionsmaterial insgesamt der Feuerungsanlage zugeführt wird.

Das aus einer Feuerungsanlage (1) eines Dampferzeugers kommende, Schwefeldioxid und Stickstoffoxide enthaltende Abgas wird gemäß Fig. 1 einer Sprühadsorptionswäsche in einem Sprühsorptionsreaktor (2) unterzogen, in dem das Abgas mit einer durch eine Zerstäubereinrichtung (3) feinstversprühten Additiv-Wasser-Suspension behandelt und dabei vom Hauptanteil an Schwefeldioxid befreit wird. Während dieser Schwefeldioxideinbindung trocknet die eingesprühte Suspension im Reaktor (2) zu einem Pulver aus, das an einer Austrittsstelle (4) eines trichterförmigen Teils des Reaktors (2) aus dem Prozeß entfernt wird. Das so teilentschwefelte und grob entstaubte Abgas enthält in Staubform Flugstaub, Additiv,

Sulfite und Sulfate des Additivs und Schwermetallverbindungen.

Über eine Leitung (5) gelangt das Abgas in eine Filteranlage (6), die ein Elektro- oder ein Gewebefilter, ein Zyklon oder eine andere bekannte Einrichtung zur trockenen Staubabscheidung sein kann. Bei entsprechend kleinen Staubmengen im teilentschwefelten Abgas kann ggf. auf diese Filteranlage verzichtet werden. Der durch das Filter (6) aus dem Abgas abgeschiedene Staub wird an einer tiefsten Stelle (7) über filtereigene Austragorgane abgeführt. Die Filteranlage kommt nur bei den Trocken-Verfahren zum Einsatz, nicht aber bei Naßverfahren.

Das nunmehr vorgereinigte Abgas gelangt über eine Leitung (8), in die über eine Zuführleitung (9) Ammoniak in überstöchiometrischer Menge dem Abgas zugemischt wird, in einen Wanderschichtadsorber (10), in dem durch Jalousien (11) und (12) und eine gasdurchlässige Trennwand (13) zwei Wanderschichten (14) und (15) bestimmt sind, die von dem Abgas querdurchströmt werden. Durch die Zugabe des Ammoniaks werden die in dem Abgas enthaltenen Stickstoffoxide im wesentlichen nach den folgenden Reaktionsgleichungen:

$$4\ NO + 4\ NH_3 + O_2 \longrightarrow 4\ N_2 + 6\ H_2O$$

$$2\ NO_2 + 4\ NH_3 + O_2 \longrightarrow 3\ N_2 + 6\ H_2O$$

reduziert, wobei die Gastemperatur vorzugsweise im Bereich von 80 bis 180°C, wiederum bevorzugt 80 bis 150°C, liegt.

Die erste Wanderschicht (14) des Adsorbers (10) wird aus einem Bunker (16) mit frischem Bruckkoks mit einer Körnung bis 10 mm beschickt, im Falle der Verwendung von Koks oder Aktivkohle aus Braunkohle in einer Körnung bis 4 mm. In dieser als Tiefbettfilter ausgestalteten Wanderschicht (14)

wird der im Rauchgas verbliebene Staubrest durch Ablagerung auf der Oberfläche der Koksstücke ausgefiltert. Gleichzeitig wird das Abgas von dem vergleichsweise geringen Teil des noch vorliegenden Schwefeldioxids befreit. Auch das sich bildende Ammoniumhydrogensulfat wird durch Ablagerung auf der Oberfläche der Koksstücke ausgefiltert.

Der beladene Bruchkoks wird an einer Austrittsstelle (17) aus dem Adsorber (10) abgezogen und einem Rüttelsieb (18) zugeführt, wo abgelagerte Staubpartikel, sowie Koksabrieb ausgeschieden werden. Der Bruchkoks wird, sofern er noch brauchbar ist, über eine Transportleitung (19) zum Bunker (16) rückgeführt. Andernfalls wird er über eine Transportleitung (20) der Feuerungsanlage des Dampferzeugers zugeführt, d.h. auf besonders einfache und wirtschaftlich vertretbare Weise entsorgt, da eine relativ aufwendige und somit teure Regenerierung des Bruchkokses aus wirtschaftlichen Erwägungen ausscheidet. Bei der Verbrennung in der Feuerungsanlage wird das am Bruchkoks adsorbierte Schwefeldioxid wieder freigesetzt und aus dem Abgas in dem Sprühabsorptionsreaktor (2) abgeschieden.

Die Wandergeschwindigkeit der Schicht (14) ist so groß, daß das Abgas mit einem minimalen $SO_2$-Gehalt durch die Trennwand (13) in die zweite Wanderschicht (15) eintritt. Dieser Schicht können - falls erforderlich - weitere Schichten nachgeschaltet werden. Die zweite Wanderschicht wird von hochwertigem Adsorptionsmittel in Form von Aktivkohle und/oder Aktivkoks beschickt. Wegen des äußerst geringen Gehaltes an Schwefeldioxid wird die zweite Schicht nur sehr langsam desaktiviert, wodurch eine kleine Wandergeschwindigkeit des Adsorptionsmittels in der Wanderschicht (15) möglich wird und zugleich eine geringere Zahl von Regenerierungsschritten erforderlich ist. Wegen der geringen Beladung ist es auch möglich, die Schicht (15) chargenweise zu ersetzen. Das zu

./.

regenerierende Adorptionsmittel wird an einer Austrittsstelle (21) des Adsorbers (10) ausgetragen und über eine Transportleitung (22) zu einer Regenerationseinrichtung (23) gefördert, wo sie zur Mehrfachverwendung in bekannter Weise einem Desorptionsprozeß, beispielsweise einer thermischen Behandlung oder einer Mikrowellenbestrahlung unterworfen wird. Danach wird das regenerierte Adsorptionsmittel über eine Transportleitung (24) zur zweiten Wanderschicht (15) zurückgeführt. Das in der Regenerationseinrichtung (23) anfallende Desorptionsgas wird über eine Leitung (25) abgezogen und dem Abgasstrom vor dem Sprühsorptionsreaktor (2) zugeführt. Es könnte auch je nach der Schwefeldioxid-Konzentration zu flüssigem Schwefeldioxid, elementarem Schwefel, Schwefelsäure oder anderen schwefelhaltigen Produkten verarbeitet werden. Das vollständig gereinigte Abgas verläßt die Gesamtanlage über einen dem Adsorber (10) nachgeschalteten Kamin (26).

Bei der Ausführungsform gemäß Fig. 2 sind soweit als möglich dieselben Bezugszeichen verwendet worden.

Die Ausführungsform gemäß Fig. 2 unterscheidet sich von der Ausführungsform gemäß Fig. 1 im wesentlichen dadurch, daß an Stelle des einen Wanderschichtadsorbers mit einem Behälter (2) von einander getrennte Wanderschichtreaktoren (27) und (28) vorgesehen sind, in denen jeweils die erste Schicht (14) und die zweite Schicht (15) geführt sind. Die beiden Wanderschichtreaktoren (27) und (28) sind durch eine Leitung (29) mit einander verbunden, in der eine Meßstelle (30) für die Erfassung des Schwefeldioxid- und Stickstoffoxid-Gehaltes angeordnet ist. Es können auch getrennte Meßstellen vorgesehen sein. Weiterhin ist der Leitung (29) eine Zumischeinrichtung (31) für die Zumischung von Ammoniak zugeordnet. Diese Zumischeinrichtung (31) weist ein schematisch dargestelltes Ventil (32) für die Steuerung der

./.

Einbringung von Ammoniak in die Leitung (29) auf. Der Leitung (9) ist eine weitere $NO_X$-$SO_2$-Meßstelle (33) zugeordnet, die ein Ventil (34) ansteuert, das der Zumischeinrichtung (9) zugeordnet ist (eine solche Anordnung kann auch bei der Fig. 1 eingesetzt werden).

Über die Zumischeinrichtung (9) wird Ammoniak bezogen auf $NO_X$ und $SO_2$ überstöchiometrisch zugeführt, während über die Zumischeinrichtung (31) Ammoniak bezogen auf $NO_X$ im wesentlichen stöchiometrisch zugeführt wird.

Die der Entnahmestelle (17) zugeordnete Zellenradschleuse wird von der Meßstelle (30) her so angesteuert, daß die Fließgeschwindigkeit in der Wanderschicht (14) so eingestellt wird, daß der Rest-$SO_2$-Gehalt in der Leitung (29) gerade gegen 0 tendiert.

Bei der Ausführungsform gemäß Fig. 2 ist eine Siebung und Rückführung des Adsorptionsmittels nicht vorgesehen, sondern das gesamte abgezogene Adsorptionsmittel wird über Leitung (20) der Feuerungsanlage (1) zugeführt.

Das Verhältnis des über Leitung (20) der Feuerungsanlage (1) zugeführten brennbaren Materials bei der Ausführungsform gemäß Fig. 1 variiert werden, indem unter Umständen mehr oder weniger Material über die Leitung (19) über die Wanderschicht im Kreis gefahren wird. Selbstverständlich muß bei der Fig. 1 der abgezogene Teil ersetzt werden, während bei der Ausführungsform gemäß Fig. 2 der gesamte abgezogene Teil fortlaufend ersetzt werden muß. Das billige in der ersten Schicht verwandte Adsorptionsmittel, vorzugsweise Braunkohlenkoks, Braunkohlenaktivkoks oder Braunkohlenaktivkohle, kann wirtschaftlich in der Feuerung verbrannt werden; eine Regenerierung ist nicht wirtschaftlich. Diese könnte sich nur für das höher wertige Adsorptionsmittel in der zweiten Schicht lohnen.

./.

Obwohl das Verfahren im Zusammenhang mit den Fig. 1 und 2 nur in Zusammenhang mit einem Sprühadsorptionsschritt zur Entfernung des Hauptanteils an Schwefeloxiden beschrieben worden ist, können auch andere nasse oder trockene Waschverfahren eingesetzt werden. Bei einem nassen Waschverfahren wäre eine Tröpfchenabscheidung nach dem Wäscher erforderlich.

Es wäre auch denkbar, bei der Ausführungsform gemäß Fig. 1, bei der beide Wanderschichten in einem Behälter angeordnet sind, durch geeignete Maßnahmen eine Einbringung von Ammoniak im Bereich der Trennwand vorzunehmen. Es ist jedoch einfacher, das Ammoniak in eine Verbindungsleitung zwischen zwei getrennten Behältern einzubringen.

Hugo Petersen
Gesellschaft für verfahrenstechnischen Anlagenbau mbH & Co KG
Postfach 4640

6200 Wiesbaden, 20.02.1986

0193135

Patentansprüche

1. Verfahren zur Entfernung von Schwefeldioxid und Stickstoffoxiden aus einem Abgas, bei dem das Abgas mindestens durch eine als Wanderschicht ausgebildete erste Schicht aus einem körnigen, kohlenstoffhaltigen Adsorptionsmittel und danach durch eine zweite Schicht aus einem solchen Adsorptionsmittel strömt und bei dem zumindest vor der ersten Schicht Ammoniak oder eine Ammoniakvorstufe in das Abgas zugegeben wird, wobei aus den sich im wesentlichen senkrecht erstreckenden Schichten unten Adsorptionsmittel abgezogen und oben Adsorptionsmittel zugeführt werden kann, dadurch gekennzeichnet, daß der Hauptteil an Schwefeldioxid vor der Ammoniakzugabe durch Zugabe von Schwefeldioxid bindenden Additiven entfernt wird und für die Schichten unterschiedliche Adsorptionsmittel eingesetzt werden.

2. Verfahren nach Anspruch 1, dadurch gekennzeichnet, daß für die erste Schicht Koks oder Kohle in relativ grobkörniger bis bruchstückhafter Form und für die zweite Schicht hochwertige Aktivkohle/Aktivkoks eingesetzt wird.

3. Verfahren nach den Anspruch 1 oder 2, dadurch gekennzeichnet, daß für die erste Schicht Braunkohlenkoks, Braunkohlenaktivkoks oder Braunkohlenaktivkohle eingesetzt wird.

./.

4. Verfahren nach einem der Ansprüche 1 bis 3, d a d u r c h g e k e n n z e i c h n e t, daß zumindest ein Teil des aus der ersten Schicht abgezogenen Adsorptionsmittels einer Feuerungsanlage zugeführt wird.

5. Verfahren nach Ansprüche 4, d a d u r c h g e k e n n z e i c h n e t, daß das Adsorptionsmittel vor Einbringen in die Feuerungsanlage gemahlen wird.

6. Verfahren nach einem der Ansprüche 1 bis 5, d a d u r c h g e k e n n z e i c h n e t, daß das aus der zweiten Schicht abgezogene Adsorptionsmittel in an sich bekannter Weise regeneriert und der zweiten Schicht wieder zugeführt wird.

7. Verfahren nach einem der Ansprüche 1 bis 6, d a d u r c h g e k e n n z e i c h n e t, daß das Desorptionsgas der Regeneration dem Abgasstrom vor Zugabe der schwefeleinbindenden Additive zugeführt wird.

8. Verfahren nach einem der Ansprüche 1 bis 7, d a d u r c h g e k e n n z e i c h n e t, daß die zweite Schicht als Wanderschicht geführt wird oder chargenweise ersetzt wird.

9. Verfahren nach einem der Ansprüche 1 bis 8, d a d u r c h g e k e n n z e i c h n e t, daß zusätzlich Ammoniak vor der zweiten Schicht zugesetzt wird.

10. Verfahren nach einem der Ansprüche 1 bis 9, d a d u r c h g e k e n n z e i c h n e t, daß vor der ersten Schicht dem Abgas bezogen auf den $SO_2$- und $NO_X$-Gehalt im Abgas eine überstöchiomtrische Ammoniakmenge zugemischt wird.

./.

11. Verfahren nach einem der Ansprüche 1 bis 10, dadurch gekennzeichnet, daß vor der zweiten Schicht Ammoniak bezogen auf den $NO_X$-Gehalt im unterstöchiometrischen bis im wesentlichen stöchiometrischen Verhältnis zugemischt wird.

12. Verfahren nach einem der Ansprüche 1 bis 11, dadurch gekennzeichnet, daß die Wandergeschwindigkeit des Adsorptionsmittels in der ersten Schicht in Abhängigkeit von einem Minimal-$SO_2$-Gehalt im Abgas nach der ersten Schicht und/oder dem Druckverlust in der ersten Schicht geregelt wird.

13. Vorrichtung zur Durchführung des Verfahrens nach einem der Ansprüche 1 bis 12, bestehend aus mindestens zwei mit einem kohlenstoffhaltigen Adsorptionsmittel gefüllten und hintereinander angeordneten Schichtreaktoren, von denen mindestens der erste ein Wanderschichtreaktor ist, aus Aufgabeeinrichtungen am oberen Ende der Reaktoren und Abfuhreinrichtungen am unteren Ende der Reaktoren und Abgaszuführ- und -abführleitungen und aus mindestens einer Einrichtung für die Zufuhr von Ammoniak in das Abgas, dadurch gekennzeichnet, daß ein Wäscher (2) für die trockene oder nasse Wäsche des Abgases mit Schwefeldioxid bindenden Additiven (3) vorgesehen ist und die Schichtreaktoren (14, 15) mit unterschiedlichen Adsorptionsmitteln gefüllt sind.

14. Vorrichtung nach Anspruch 13, dadurch gekennzeichnet, daß die beiden Schichtreaktoren (14, 15) durch Anordnung einer gasdurchlässigen Trennwand (13) in einem Behälter (10) ausgebildet sind.

15. Vorrichtung nach Anspruch 13, dadurch gekennzeichnet, daß die beiden

./.

Schichtreaktoren durch zwei getrennte Behälter (27, 28) gebildet sind, die durch eine Verbindungsleitung (29) verbunden sind, an der eine weitere Einrichtung (31) für die Zufuhr von Ammoniak vorgesehen ist.

16. Vorrichtung nach einem der Ansprüche 13 bis 15, dadurch gekennzeichnet, daß der zweite Schichtreaktor (15; 28) ebenfalls ein Wanderbettreakor oder ein chargenweise beladbarer Reaktor ist.

17. Vorrichtung nach einem der Ansprüche 13 bis 16, dadurch gekennzeichnet, daß der erste Reaktor mit einem Adsorptionsmittel auf Braunkohle-Basis und der zweite Reaktor mit höherwertiger Aktivkohle/Aktivkoks gefüllt ist.

18. Vorrichtung nach einem der Ansprüche 13 bis 17, dadurch gekennzeichnet, daß der erste Wanderschichtreaktor ein Tiefbettreaktor ist, der als Quer- oder Gegenstromreaktor ausgebildet ist.

19. Vorrichtung nach einem der Ansprüche 13 bis 18, dadurch gekennzeichnet, daß die beiden Reaktoren Wanderschichtreaktoren (14, 15) mit unterschiedlichen Wandergeschwindigkeiten sind.

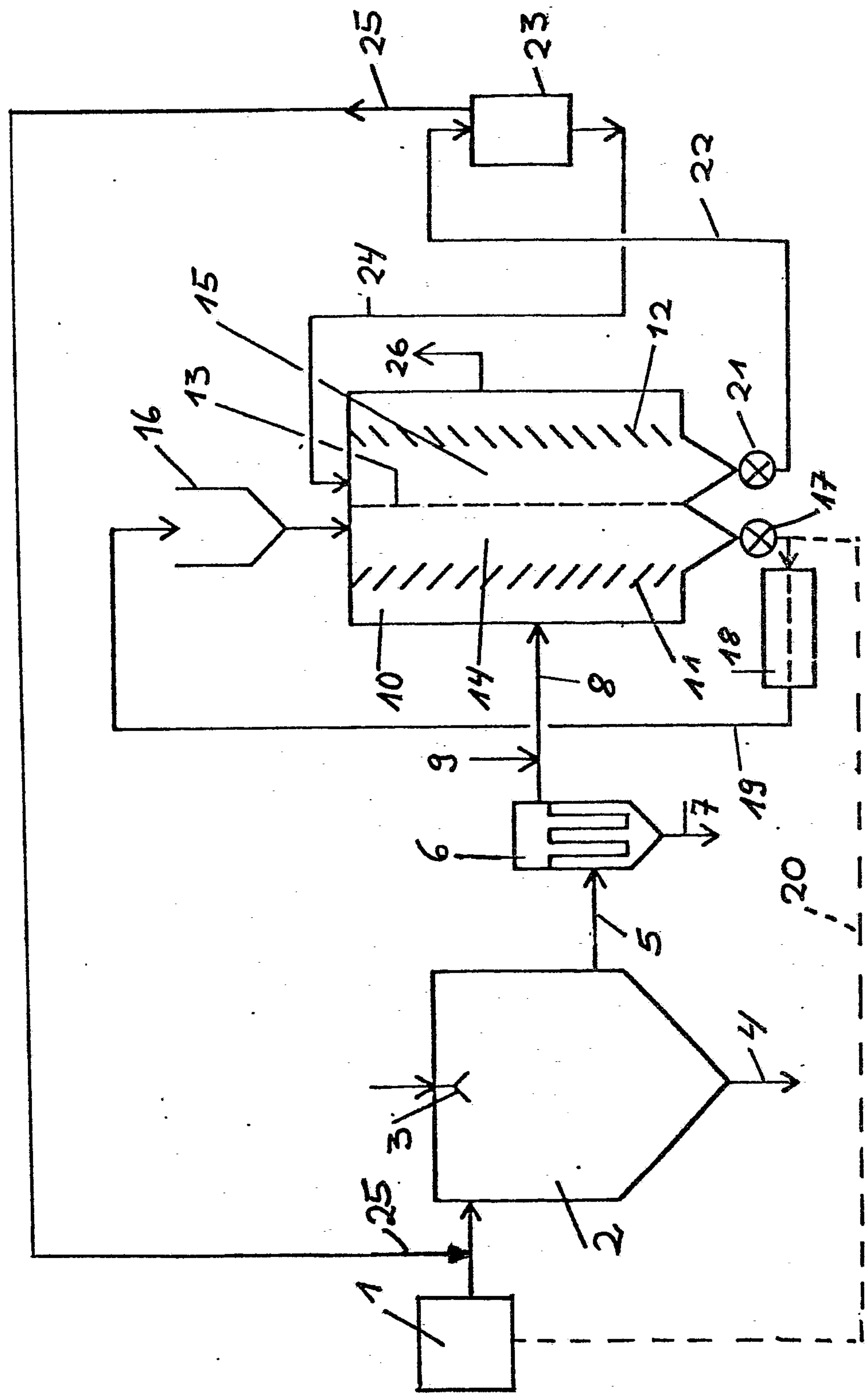


Fig. 1.

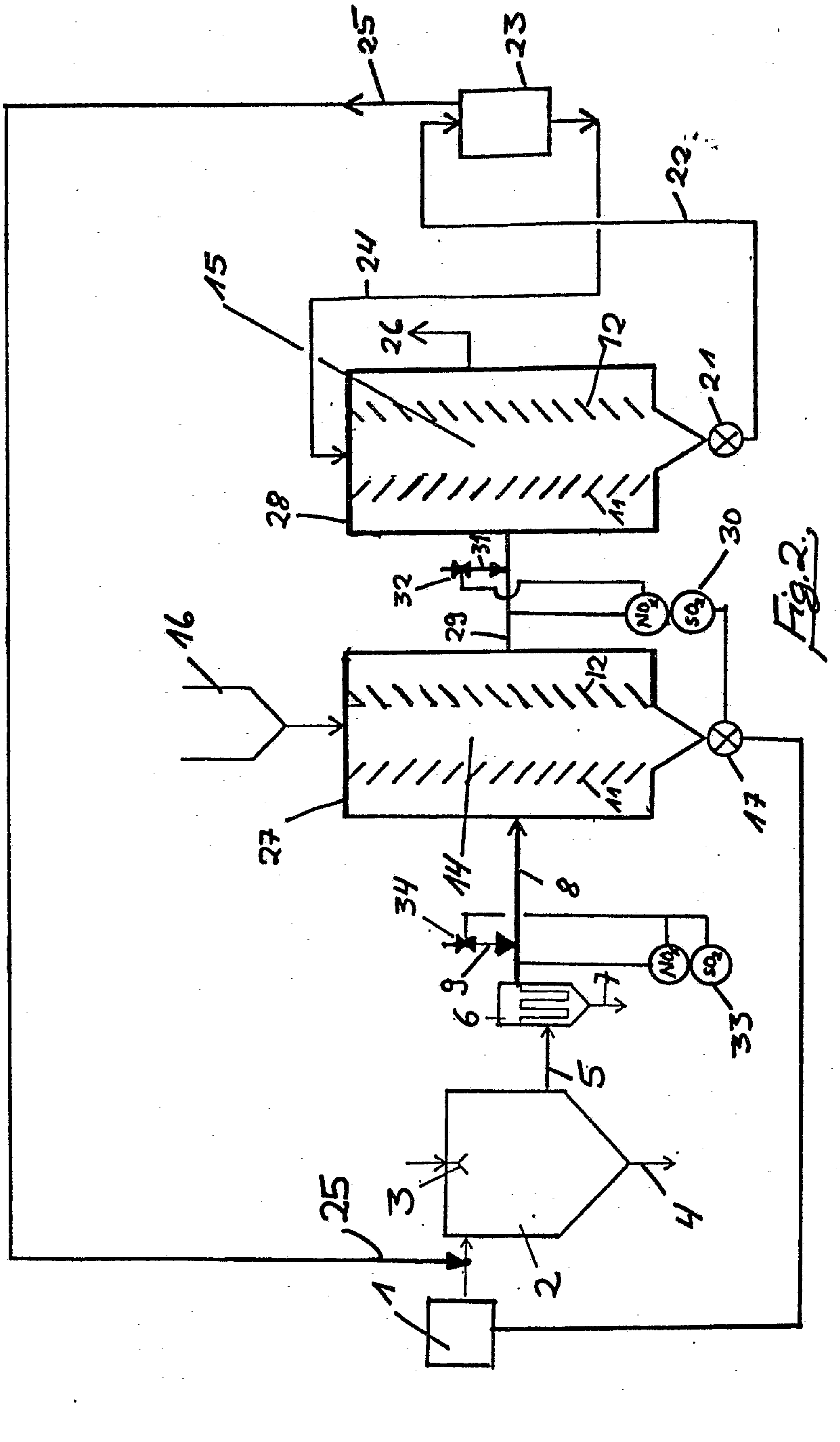

1
2
3
4
5
6
7
8
9
11
12
14
15
16
17
21
22
23
24
25
26
27
28
29
30
31
32
33
34
NO2
SO2


Fig.2.